# EUROPEAN PATENT SPECIFICATION

(11) **EP 3 287 958 B1**
(45) Date of publication and mention of the grant of the patent: **23.12.2020**
(21) Application number: 16185231.4
(22) Date of filing: 23.08.2016
(51) Int. Cl.: G06N 5/04, G06N 5/02

(54) **DEVICE, VEHICLE, SYSTEM AND METHOD FOR IMITATING HUMAN PERSONALITY OF A DIGITAL DEVICE**
GERÄT, FAHRZEUG, SYSTEM UND VERFAHREN ZUR NACHAHMUNG DER MENSCHLICHEN PERSÖNLICHKEIT EINES DIGITALEN GERÄTS
DISPOSITIF, VÉHICULE, SYSTÈME ET PROCÉDÉ POUR IMITER LA PERSONNALITÉ HUMAINE D'UN DISPOSITIF NUMÉRIQUE

(43) Date of publication of application: 28.02.2018
(73) Proprietor: Honda Research Institute Europe GmbH, 63073 Offenbach/Main (DE)
(72) Inventor: Weisswange, Thomas, 63073 Offenbach/Main (DE)
(74) Representative: Beder, Jens

(56) References cited:
- US-A1- 2001 041 496
- US-A1- 2013 191 026

## Description

The invention regards a digital device and a method to be executed by such device that imitates human behavior thereby pretending to have an own personality. The invention also regards a vehicle with such a device being mounted thereon and a system used to define the personality of such device.

Due to the improved capability of data processing but also increased functionality with respect to communication of digital devices, it became possible over the last years to increase the functionality of a digital assistance system. Current digital assistant systems focus on supporting the user with tasks. Thus, if a user inputs a question to such system the system will automatically search for information related to the spoken instruction. One example for such digital assistant system is Siri by Apple, which is described for example in US 2012 001 667 8 A1. The problem with such digital assistants is that they appear to have personality, because it is recognizable at first glance that they act as robot or a machine. To avoid such cold appearance some funny answers to certain questions may also be given by the known system. But still such answers are very limited and in fact are presented in the same way to the user every time the same question is asked. Thus, still there is a great emotional distance between the user and the device. An attempt to make a vehicle pretend to have an own personality has been made in US 2003 060 937. Here, based on sensed physical parameters of the vehicle, the vehicle will output information that resemble a person feeling comfortable or discomfortable for example. But here again, the user, in that case will quickly recognize that it is purely the reaction of machine. If the vehicle will for example output emoticons and respond to the physical driving states, switching between the output emoticons will always take place in the same manner. Thus, it is predictable by the driver. Everything that is predictable will necessarily be recognized as a result of a strict algorithm that is used for outputting such emoticons. US 2013/0191026 A1 proposes a navigation system showing a personality. The navigation system provides responses to and comments on a user's requests and actions whether right or wrong. The navigation system may call the user/driver by name, nickname or swearword depending on the settings instilled by the user and the "mood" of the device. The term "navigation system" in US 2013/019126 A1 applies to any device used to navigate movement from one place to another, whether a car navigation system or a mobile phone navigation system. It is also suggested that a vehicle can greet the driver with her/his name. The vehicle may save and deploy driver specific settings like climate control setting, radio station setting, and audio system settings. The navigation system of the vehicle provides a place to enter, save and deploy those settings.

Thus, it is desired to provide a device and a respective method that gives the impression of a device having personality for the user. In order to achieve this objective, the present invention provides a system for defining a personality of a device according to claim 1, and a method for defining a personality of a device according to claim 17. All preferred embodiments of this system and this method are defined in the dependent claims.

The device comprises a memory in which trigger events and an output generation function are stored, an information obtaining unit configured to obtain environment information from the environment of the device, a computing unit configured to compare the obtained environment information with the stored trigger events and, in case that the environment information matches a trigger event of the stored trigger events, to generate output information which generates an output related to the trigger event, based on said output generation function. The memory is further configured to store personality trait parameters. The personality trait parameters are preselected from a plurality of available personality trait parameters and define a personality of the device, and for each personality trait parameter of the preselected personality trait parameters for the device, the trigger events are stored associated along with the output information.

The invention is characterized in that the system comprises a personality trait determination unit configured to perform a trait generation process, in which a character type database is constructed based on a human traits data base by storing character groups, each character group having an individual probability distribution over human traits stored in the human traits database including information on a plurality of topics human beings care about. The memory comprises a personality memory section, which is configured to store the trigger events associated with the personality trait parameters and output information generated in the trait generation process. The output information is generated in response to the environment information matching the trigger event such that it deviates from previously output information in response to environment information matching the same trigger event.

The method that is performed by the device according to the present invention thus, contrary to the solutions known form the prior art, does not repeat the same output twice. Even if a situation that is experienced twice is commented in order to pretend a certain emotion, the way of outputting such information like an emotion will be altered. The device has a memory in which trigger events are stored. Furthermore, output generation functions are stored in the memory and information on the environment of the device is obtained by an information obtaining unit. By comparing the obtained information with the stored trigger events it is determined if such event that is stored in the memory currently occurs. If the information obtained matches the trigger event then the output information is generated on the basis of the function stored in the memory. The output information as well as the comparison is conducted in the computing unit. When such output information is generated in response to environment information matching a trigger event, it is ensured that the generated output deviates from a previously generated output in case that the same trigger event is matched by the obtained information. This can be achieved in quite a plurality of ways, in particular the output information that was already used in response to the information obtained matching the trigger event can be stored in a look-up table which is then used in case that the obtained information again matches the trigger event. If the output generation already was used previously, it is then altered or it is selected from a pool of different pieces of output information by using a random number. Because a person, when giving any kind of information with respect to its emotions, also does not repeat a sentence, a gesture or a frown in the very same way, this approach makes the device feel more human or to have its own personality.

With the output generation function, the output information is generated on the basis of a personality trait parameter. Thus, by using different sets of personality trait parameters different personalities of the device can be simulated. This allows that always using the same basic configuration and layout of the device it is possible to preset the personality trait parameters individually and thereby define a different personality for each individual device. In order to ensure that this effect will be recognized by a plurality of costumers, it is necessary that these plural trait parameters are stored when manufacturing the device so that the user cannot achieve later on change of these parameters. It is preferred that a plurality of different personality trait parameters is stored in each device and that, depending on the obtained information that matches a particular trigger event, the personality trait parameter that is to be used in the function for generating the output information is selected.

Examples for types of personality trait parameters are: music style, music performer, music song, historic or alive person of interest, location or region, a scientific field, societal field, weather, time or date or season, sports, a sports team or device settings. Of course, a combination of trait parameters can be used also and it is obvious that this list can only comprise a number of examples and other personality trait parameters can be thought of as well.

It is in particular preferred that information on a situation that is experienced by the device together with the user will be stored in the memory as well. Then a trigger event corresponding to such information is generated and stored in the memory as well. Thereafter it is possible that the device "remembers" that it experienced this particular situation together with a user or operator of the device. Thus, an output can be generated that reminds the user that he had a common experience with the device. Such remembering of a device also gives the impression that the device has a personality.

According to another advantageous aspect the trigger events comprise thresholds for device related parameters and the computing unit is configured to record statistics on these parameters. In particular in case that the device is mounted on a vehicle, it is thus possible to use age, mileage, number of refuels, maximally driven speed, maximal driving duration, maximal driving distance, maximum outside temperature or minimum outside temperature or the like. Using these values or parameters for triggering an output of the device will also decrease an emotional distance between a user and the device. The reason is that a reaction on these parameters reminds the user that the device and he himself have experienced various situations in the past.

The information obtaining unit can comprise or be connected to at least a microphone, a camera, a global positioning sensor and a temperature sensor. All these sensors or virtual sensors allow to physically sense or indirectly determine information on the currently experienced situation of the device. Thus, this information can be processed in order to precisely define the situation.

In case that the device is mounted on a vehicle, it is of course possible to use such sensing means that is already present in the vehicle.

To further improve the impression of the device having a personality or acting at least like a human, the computing unit is configured to determine if outputting the generated information at a particular point in time is appropriate or not. Thus, on the basis of information that is gathered from the environment of the vehicle, it is determined for example if at the moment, the information that is output can be recognized by the user at all, or if it will disturb him if he for example is currently involved in a conversation. Thus, if a conversation is currently held in the environment of the device, no immediate output of the generated information is performed. Such output can, for example, be either delayed or if the time from generating this information would be to long and thus, the relation with the underlying trigger event cannot be recognized by the user, it can be cancelled completely. Other examples on the basis of which a determination if the current output is appropriate can be made are a physical state of the device, weather, time since the last output, a situation encountered by the device or a user state. In particular, the physical state of the device and the user state are reasonable if the device is mounted on a vehicle. In that case, comments could be made with respect to the current driving of the user. It is also in particular preferred that the time since the last output is a relevant input when considering if currently an outputting of the generated information is reasonable. In case that for example the device comments on a song that is played by a particular radio station, and after that the user changes the radio station and by chance, here the same song is played also, this would necessarily lead to repetition of a quite similar information. But, this does not resemble the device being a human and therefore the information will be output only if a minimum time interval has passed since the last output for the same trigger event. Furthermore, it is preferred that the way of outputting the generated information is determined on the basis of the personality trait parameter used in the output function. Thus, the manner of outputting the information can be adapted to a particular emotion or reaction that shall be conveyed to the user. In some cases, a sound output may be more appropriate. For example grumbling in case that something happened "the device" does not like, whereas in another situations, the speech output seems more appropriate.

If the device is mounted on a vehicle, it is in particular useful to connect the information obtaining unit to some of the vehicle equipment in order to use the functionality thereof. Such vehicle equipment may for example be a vehicle entertainment system, a vehicle status unit, outside or inside sensing devices, a web service, a mobile communication terminal or a navigation system. Thus, redundancy of such apparatuses or devices can be avoided. On the other side, it is also preferred that the generated information comprises a signal that is suitable to control settings of the vehicle equipment. By use of such vehicle equipment, also emotions can be expressed. This is particularly useful for ambience light settings, infotainment system settings or even climate control.

When setting up the system which is as mentioned above done during the manufacturing process, it is furthermore advantageous to take into consideration user interests that the user can input into such system for configuring the device. The input interests from the user are compared to the personality trait parameters in a determination unit that is capable of determining a similarly score. The personality trait parameters that are then used with respect to this particular device of a user are then selected accordingly.

The device, method, vehicle and system will now be explained using the annexed drawings in more detail and examples of the functioning are given. In the figures, there shows
Figure 1 a simplified block diagram of the device and system according to the present invention;
Figure 2 a flowchart for illustrating the main method steps of the current invention; and
Figure 3 a simplified block diagram for generating a personality memory for a device according to the present invention.

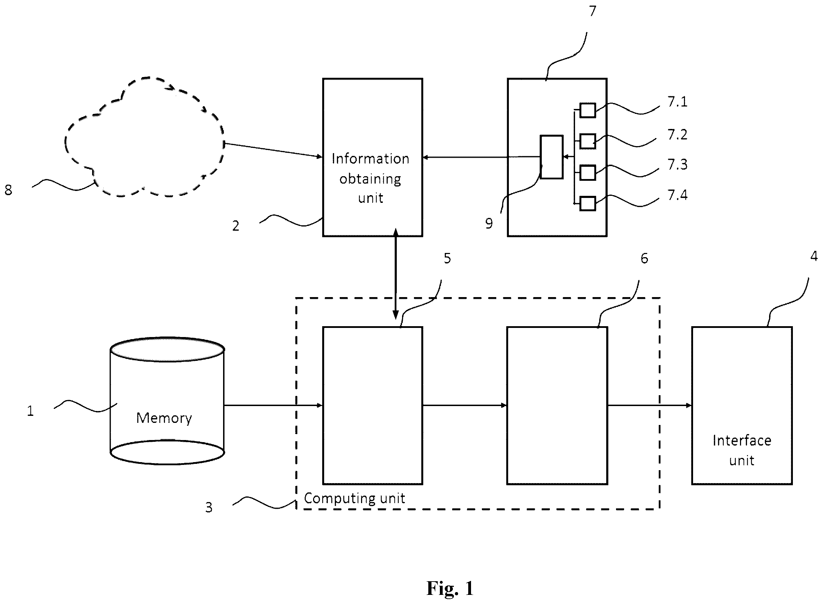

In figure 1 a device according to the present invention is illustrated. The device is preferably mounted on a vehicle, not illustrated in figure 1. The system comprises a memory 1 and an information obtaining unit 2. Memory 1 and information obtaining unit 2 are connected to a computing unit 3. The computing unit 3 processes data that is retrieved from memory 1 and from information obtaining unit 2 and generates output information that is transferred to an interface unit 4.

The information obtaining unit 2 is in particular connected to a sensing means 7 that comprises for example a plurality of different sensors 7.1., 7.3 and 7.4 that are capable of sensing the environment of the device, in particular the environment of the vehicle. Environment of the vehicle can be outside of the vehicle but also inside of the vehicle. The sensor 7.1 may be for example a microphone, sensor 7.2 can be a camera, sensor 7.3 a global positioning sensor and sensor 7.4 a temperature sensor. The sensor outputs of sensor 7.1 to 7.4 are forwarded to the information obtaining unit 2. Of course, before the information is transferred to the information obtaining unit 2 the sensor output can be pre-processed by a processor 9. The sensing means 7 can also be included in the information obtaining means.

On the other side the information obtaining unit 2 may be connected to a web service 8, using commonly known communication technology.

In the memory 1 there is stored a plurality of trigger events. Such trigger events define a situation in which an information output shall be generated by the system. Thus, the trigger event is a condition that needs to be fulfilled by the information obtained by the information obtaining unit 2. The computing unit 3 accesses the memory 1 to retrieve the trigger events and compares them to the information that is received from the information obtaining unit 2. If the received information and the trigger event match then this information is passed internally in the computing unit 3 from a trigger evaluation section 5 to an output information generating unit 6. The information that is output for this particular situation corresponding to the trigger event is generated on the basis of personality trait parameters that arc also stored in memory 1. The personality trait parameters are selected during the manufacturing process of the device from a higher number of personality trait parameters that are in general available. The set of personality trait parameters that is then stored in a memory of a particular device define a personality for this particular device. It is to be noted that updating theses personality trait parameters is possible but the memory 1 can be accessed for updating the parameters only by the manufacturer or by authorized personal. Thus, changing the personality of the device by the user is prevented by denying access to the section where the parameters are stored in memory 1. Thus, the personality trait parameters cannot be compared to commonly known preference settings that can be adjusted by the user of a device. Contrary to that the device has a fixed personality. Nevertheless the system can adapt to user reactions on the output information for example by analyzing what can be observed by the user. The analysis then allows to adjust for example the frequency of outputting information after having determined that the obtained information matches the trigger event.

The trigger events that are stored in the memory 1 can be either predetermined by the manufacturer or a rule for generating new trigger events can be programmed in the system. In the latter case it is for example possible to set up a rule that a new trigger event is generated and stored in memory 1 in case that the device together with its user visited a point of interest. The information in points of interest can for example be derived from a navigation system that is also mounted on the vehicle. Of course also the current location of the user and the device can be determined from the GPS sensors. If such location is visited for the first time then the system car store a trigger event and in case that the device and the user return to the same place an output referring to the earlier visit can be generated.

Generation of the output information can be performed in the basis of a plurality of possible outputs as a reaction of a particular trigger event and use of a random number in order to choose one out of this plurality. This ensures that two successive pieces of output information with respect to the same trigger event are not identical. The selection for the new situation satisfying the trigger event is thus preferably performed on the basis of the remaining pieces of information but not the one that was used already before.

Of course it is also possible to use an algorithm that generates the new output information from the one that was used the last time in order to change it.

The interface unit 4 may be a display, a loud speaker, a number of LED's, an odor generator or an anthropomorphic piece of hardware like a robotic head, an arm, hand, eyes or mouth. Depending on the situation that triggers the output of information it is also possible to select a particular element of an interface unit that comprises at least two or even more of the given examples.

It is to be noted that the information that is output always refers to the event that triggers the output of the information but not to a spoken user instruction or the like that defines a task for the device. The device observes the situations that are currently encountered and automatically will generate an output information representing an emotion caused by the triggering event. Since the personality trait parameters are preset by the manufacturer, the output information will not at all relate to any instruction from the user but will be generated out of the situation alone.

In fig. 1 it is furthermore indicated that via a web service 8 also information can be retrieved form external servers. The system thus can use any information that can be retrieved from the internet for example weather forecast, traffic jams that are announced and lie along a route and so on.

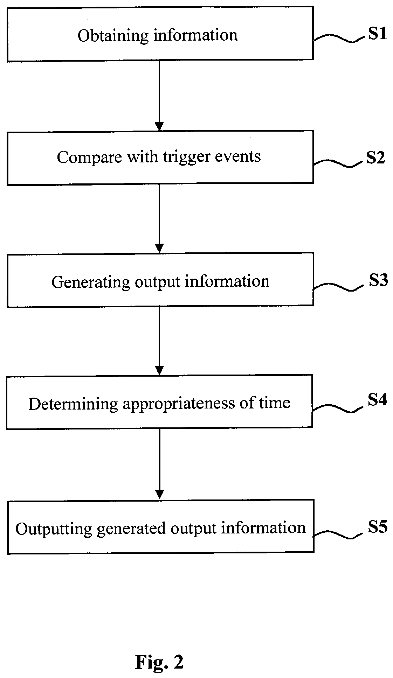

A simplified flowchart is given in fig. 2 to explain the inventive method. At first in step S1 information that is suitable to describe a currently experienced situation is obtained. This information is then compared with trigger events in step S2 and if it is determined that the currently experienced situation corresponds to the one that is defined in the trigger event an output is generated in step S3.

In particular the memory 1 of the device comprises a personality memory section, in which the trigger events are stored associated with trait parameters and trait outputs which were generated in a trait generation process.

For each trigger event a trigger description can be stored including a strategy or process where the trigger evaluation section 5 is to search for a respective event. For example the trigger evaluation section 5 can be configured to control the information obtaining unit 2 to search for appearance of a keyword on a web page accessible via the web service 8, to obtain local device parameters having certain value.

In an embodiment of the personality memory section stored in memory 1, some or all of the stored trigger events are stored in association with an activation probability parameter. The activation probability parameter defines a probability if an output is generated for the associated trigger event.

The activation probability parameter can be a static, preset value or, in an advantageous example, a dynamic activation probability parameter whose value is dynamically changed over time and/or when the trigger event initiates the output information generation unit 6 to generate the corresponding output information. The activation probability parameter can for example be decreased every time the trigger event generates an output information. By decreasing the activation probability parameter too frequent activations of the corresponding output information are avoided. The activation probability parameter may for example subsequently be increased over time until the preset activation probability parameter value is reached, when no further activation of the respective trigger event occurs.

If the trigger activation unit 5 determines to generate an output associated to the trigger event, the output information generation unit 6 selects an output to the trigger event. In an example of the device, the output information generation unit 6 selects one or more outputs out of plural output options stored in the memory 1 based on a probability function. An output which is selected and used for an output can subsequently be deleted from a list of possible output options for that trigger event in order to avoid or reduce the probability of repeating generating same outputs.

Alternatively or additionally, new output information can be added to the output information options stored in the memory 1. The added output information can be, for example, obtained via the information obtaining unit 2 based on trigger event specific strategy stored associated with the trigger event in the personality memory section of the memory 1. The trigger event specific strategy can for example include information where to search and how to acquire output information of at least portions of output information, for example to copy comments from a web forum relevant to the trait.

Before the output generation is in fact output it is furthermore determined if the time is appropriate for outputting the generated information in step S4. If it is determined in S4 that the output of the information is appropriate, then the output information is output using the interface unit in step S5.

It is to be noted that the information that is obtained is permanently analyzed with respect to matching to the stored trigger event. Thus, without interaction with the user, for example driver of a vehicle, the system will comment on situations that are experienced by the driver and the vehicle.

### Example 1

The personality trait parameter describes a preference or disfavor for a certain music group. The system observes if by an entertainment system of the vehicle a song of this group is played. Playing such song is a trigger event that is thus matched by the situation when the song is played. As a consequence a related output information is generated. Such output information can be a comment caused by a song that is "liked by the car". In that case it could be output via the speakers of the vehicle "Could you turn it up, please" or in case that the preference parameter stored says that the group is not liked "I hate that song", etc. Additionally or alternatively an emotional sound could be output. Such emotional sound could be a moan or a hum-along.

### Example 2

The personality trait parameter in that case is a preference or a disfavor of a certain sports team. Information on such sports team is retrieved from the internet via a communication module of the device or vehicle and when news regarding this particular sports team are obtained, the situation matches the trigger event. A possible output could be the replay of the team's hymn, turning ambient light or a display to team colors, a short comment like for example "Did you see the game of XYZ yesterday?", "It's a wonderful day, XYZ won the championship yesterday!", "Great that somebody showed XYZ their limits".

### Example 3

The personality trait parameter indicates an interest in a certain general topic. Such topics may be history, philosophy, physics or the like. The trigger event that is stored in the memory defines that in case a certain anniversary of a historic event occurs, an information to be output is generated. In case of interest in philosophy or physics it is also possible that news related to such topic trigger the generation of output information. It is to be noted that the output information in general and in particular if news are triggering the output of information, can be generated from the received information itself. For example if physics news comprise an information that Higgs-Boson has been found it could be directly referred to the Higgs-Boson in the output information. Other examples for situations that cause an information to be output are commemoration of the end of World War II, 500^{th} birthday of Descartes or the like. As mentioned above the output information could also be generated from the information causing the output for example if the news is reworded into a question: "Did you know that ...?". Alternatively also related facts to the obtained information could be included in the output. Examples are: "Descartes said...", "It took 50 years to confirm the existence of the Higgs-Boson."

### Example 4

The personality trait parameter is an interest in a certain location. For example, Berlin is stored as a personality trait parameter in memory, a region (Yorkshire) or a type of building (opera, church, ...) or a country (Egypt). Since the system has knowledge about the current location of the device (using the vehicle's GPS system for example) a trigger event defining a proximity of the device to such location is matched by the current situation if the device approaches such a location. Other trigger events could be that special events happen close to this location or are related to that location. For example, a city anniversary, a catastrophe in a region/country, a new opera built in the hometown of the driver or the like. As a result, an output like a smile/positive comment when entering or approaching the location could be output. Or in case that the trigger event is matched by information (e.g. in the news) with respect to the location of interest is received, an output could be "I always wanted to visit Berlin, Yorkshire, Egypt, ...". Furthermore, virtual "personal" information of the device could be given like for example "I have an uncle in XYZ" in case that somehow the information is related to the location XYZ. The information can also refer to the event that was mentioned with respect to a city, region, ... of interest and the additional information that is presented for example by news, could be used in order to generate the information being output (example: "Did you know that...?") or some related facts ("Berlin has a beautiful zoo").

### Example 5

Another example for a personality trait parameter is preference or disfavor for a certain setting in the device like for example climate control settings, radio station, or anything else where the user has the possibility to choose from some options. A trigger event then can be matched when the user is changing such settings and as a consequence, this changing of settings could be commented by the device. The comment in such a case can either be directed to the past setting or choice or to the new setting or choice. For example, switching to a new radio station could be commented by: "I like radio station XYZ".

### Example 6

According to this example, the personality trait parameter is a preference or disfavor for certain time, day and/or season. If the obtained information shows that this particular time, day, seasons... corresponds to the current daytime, day, season, then an output making reference to this particular time could be made. Thus, if a driver drives a vehicle at a certain time of the day for which a preference trait parameter is stored in the memory, the system could output ". Almost lunchtime, I'm getting hungry", or "Winter is coming". The comment could also refer to situations that have been experienced personally like for example "Last year this time, we were in XYZ". Also, preferences or disfavors could be output with respect to the current time, day or season. Within the personality trait parameters, it is stored that the device particularly enjoys winter time, and output could be for example "Winter is my favorite season". This output is then triggered by the trigger event that the season currently is winter.

### Example 7

Personality trait according to this example is a preference or disfavor for a certain weather or outside temperature. If then the weather or temperature corresponds to the personality trait parameter occurs or even if the weather forecast mentions such weather or temperature, this triggers the output of the generated information. In that case, it could be outputted "It's going to rain" or "I love when it is cold like this". Instead of outputting comments by a speech output, it is also possible to display on a display unit, a smile or frown depending on the personality trait parameters or a change in ambient or instrument color or lighting. Also, as mentioned already above in example 1, emotional sounds can be used.

### Example 8

As it has been explained above, statistics can be generated to define lifetime events. For example, the cars anniversary or the first 10.000 km could be used to trigger outputting of information. The system might then output "Today is my xx birthday", or an emotional comment like "Wow, xx km! How time flies". It is evident that these examples only serve for illustrating the purpose and the functioning of the present invention, but have no restricting character with respect to the invention as it is defined in the set of claims.

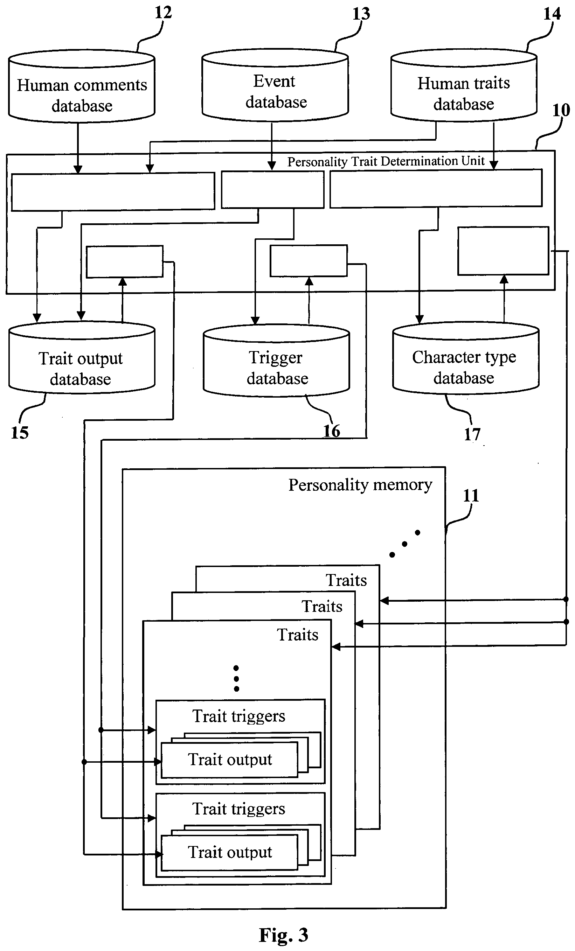

Figure 3 depicts a simplified block diagram for generating data for storing in a personality memory section 11 of a device according to the present invention. The processing in the block diagram is performed by a personality trait determination unit 10 which can be implemented in single computing unit or in distributed over a plurality of servers.

Initially, a human trait database 12 is built. The human trait database 12 includes information which collects a plurality of topics human beings care about. The human traits database stores the information in form of human traits. The information on the variety of topics further includes a form of rating information associated with the individual topics constituting the plurality of topics. The human traits database 12 can, for example, be constructed by analyzing databases accessible via web services 8 such as online databases accessible via internet. The online databases may include movie rating databases, but also web-based services such as social networks, web discussion forums, dedicated questionnaires, ... The human traits database can also be built or fed using manually generated definitions

The personality trait determination unit 10 then constructs a character types database 17 based on the human traits database 14. character types database 17 stores character groups. Each single character group of the stored character groups has an individual and therefore differing probability distribution over the human traits stored in the human traits database 14 and their corresponding rating.

The character groups stored in the character types database 17 can be generated from human data using machine learning methods, for example clustering or Bayesian models, or may be manually defined via suitable input means.

The probability distributions over the character groups may be formed using the respective methods as for the generating the character groups in the character types database 17.

In order to define a new application unit, the personality trait determination unit 10 samples a character type and traits associated with the character type from the character types database 17.

The personality trait determination unit 10 further builds a human comment database 15. The human comment database 15 stores a plurality of human comments in the form of short human statements and visually, orally or in any other way perceivable reactions within a communication. The personality trait determination unit 10 builds a human comment database 15 for example containing posted messages and/or emojis from web forums and /or social networks, selected human behaviors from interactions between humans, (semi-)automatically extracted responses and reactions from video clips or movies, ...The human comments in the human comment database 12 are grouped into topics, for example comments that are used for any kind of music song preference, and correlated with the traits and their associated ratings. The personality trait determination unit 10 can be adapted to perform this sorting and classifying of the human comments using machine learning or manual analysis and input operations. The human comments stored in the human comment database 15 may be extended or supplemented by adding more abstract output information including colors for different ratings and output information dedicated to a specific interface unit, for example a loudspeaker volume increase or decrease.

The personality trait determination unit 10 obtains possible triggers for reactions by accessing an event database 13. The event database 13 stores possible trigger events along with associatcc definitions and information where a device, resp. its information obtaining unit 4 can search for these events.

The event information stored in the event database can be directly related to interfaces of the information obtaining unit 4 and/or the sensor means 7, for example the temperature sensor 7.4.

Event information stored in the event database 13 may be defined by the appearance of keywords on specific web pages and/or databases. The personality trait determination unit 10 can perform event extraction by machine learning methods, a correlation may be performed on temporal relations. The computing unit 3 of the inventive device will control the information obtaining unit 4 to check on the occurrence of event related information later at the same sources to determine on a trigger event. Event information can be directly related to the appearance or occurrence of a trait topic, for example a topic that appears on images and/or photos related with comments by a person.

The personality trait determination unit 10 will search for trigger events, for example using object recognition software, possibly in combination with a camera, or based on position information (geolocation). The event information stored in the event database can be directly related to interfaces of the information obtaining unit 4 and/or the sensor means 7, for example the temperature sensor 7.4.

The personality trait determination unit 10 generates and stores probability distributions correlating trigger events with trait output information in a trigger database 16. The trigger database 16 also includes information on the activation probability of a specific trigger event generating a specific output information. The activation probability can be calculated using appearance frequencies of events, preferably weighted in a way to support a rare activation, for example once in a month.

The personality trait determination unit 10 selects traits from the character type database 17, the trigger database 16 and the trait output database 15. Based on the selected traits generated for a given device, for each trait possible trigger events are sampled from the trigger database 16 along with related trait output information from the traits output database 15. The sampled traits, trait output information, and trigger events are stored in the personality memory section for the memory 11

## Claims

1. System for defining a personality of a device, the device comprising:
a memory (1) in which trigger events and an output generation function are stored,
an information obtaining unit (2) configured to obtain environment information from the environment of the device,
a computing unit (3) configured to compare the obtained environment information with the stored trigger events and, in case that the environment information matches a trigger event of the stored trigger events, to generate output information which generates an output related to the trigger event, based on said output generation function, and
the memory (1) is further configured to store personality trait parameters,
wherein the personality trait parameters are preselected from a plurality of available personality trait parameters and define a personality of the device, and
for each personality trait parameter of the preselected personality trait parameters for the device, the trigger events are stored associated along with the output information, and
**characterized in**
**that** the system comprises a personality trait determination unit (10) configured to perform a trait generation process, in which a character type database (17) is constructed based on a human traits data base (14) by storing character groups in the character type database (17), each character group having an individual probability distribution over human traits stored in the human traits database (14) including information on a plurality of topics human beings care about,
**that** the system is configured to perform the personality trait generation process during manufacturing of the device and to configure the output generation function to generate the output information on the basis of a particular personality trait parameter, and the preselected personality trait parameters in the memory are accessible by authorized personal only, and
the memory (1) comprises a personality memory section (11) which is configured to store the trigger events associated with the personality trait parameters and output information generated in the personality trait generation process, and
the personality trait determination unit (10) is further configured to build a human comment database (12) storing human comments as output information correlated with the human traits and to generate a trigger database (16) storing probability distributions correlating the trigger events with the trait output information and an activation probability of a specific trigger event generating a specific output information,
**that** the output information generated in response to the environment information matching the trigger event is generated such that it deviates from previously output information in response to environment information matching the same trigger event.

2. System according to claim 1, **characterized in**
**that**, by the device, information on a situation that is experienced together with a user of the device is recorded and occurrence of a corresponding situation is generated as a new trigger condition, and
the new trigger condition corresponds to a trigger event stored in the memory (1) of the device and one or more related outputs.

3. System according to claim 1 or 2, **characterized in that**
the trigger events comprise thresholds for device related parameters and the computing unit (3) is configured to record statistics on these parameters.

4. System according to any one of claims 1 to 3, **characterized in**
**that** the information obtaining unit (2) is configured to be connected to or comprise at least one of a microphone (7.1), a camera (7.2), a global positioning sensor (7.3) and a temperature sensor (7.4).

5. System according to any one of claims 1 to 4, **characterized in**
**that** the particular personality trait parameter used in the output generation function is selected from the personality trait parameters depending on the obtained information matching a particular trigger event.

6. System according to claim 5, **characterized in**
**that** the personality trait parameters describe a preference and/or a disfavor and/or an interest in a certain topic.

7. System according to any of claims 1 to 6, **characterized in**
**that** the system is configured to store different personality trait parameters for at least one of the following categories: music style, music performer, music song, historic or alive person of public interest, location, region, scientific field, societal field, weather, time, date, season, sports, sports team and device settings.

8. System according to any one of claims 1 to 7, **characterized in**
**that** the computing unit (3) is configured to determine if the generated information is output immediately, wherein the determination considers at least one of, if a conversation is currently held in the environment of the device, a physical state of the device, weather, time since the last output, a situation encountered by the device, a state of the user of the device.

9. System according to any one of claims 1 to 8, **characterized in**
**that** the generated information is output by the device in at least one of the following ways:
Speech, utterance, pre-recorded sounds, pre-recorded music, written text, image, video, animation, lighting color, lighting pattern, visual icon, odor, device related settings.

10. System according to claim 9, **characterized in**
**that** the way of outputting the generated information is determined by the device on the basis of the personality trait parameter used in the output generation function.

11. System according to any one of claims 1 to 10, **characterized in**
**that** the device comprises an interface unit (4) for outputting the generated information, the interface unit comprising at least one of: a display, a loudspeaker, a number of LEDs, an odor generator for an anthropomorphic piece of hardware.

12. System according to any one of claims 3 to 112,
wherein the system comprises an input unit where a user can input information on his interests, and the personality trait determination unit (10) is configured to determine a similarity score between the input user interests and available personality trait values.

13. System according to any one of claims 1 to 12, wherein the device is mounted on a vehicle.

14. System according to claim 13, **characterized in**
**that** the device is configured to record vehicle statistics with respect to at least one of the following parameters: age, mileage, number of refuels, maximally driven speed, maximal driving duration, maximal driving distance, max/min outside temperature.

15. System according to claim 13 or 14, **characterized in**
**that** the information obtaining unit (2) is connected to at least one of: a vehicle entertainment system, the vehicle status unit, outside or inside sensing devices, a web service (8), a mobile communication terminal, a navigation system

16. System according to any one of claims 13 to 15, **characterized in**
**that** the generated information comprises a signal suitable to control settings of vehicle equipment, in particular ambient lighting, infotainment system or climate control.

17. Method for defining a personality of a device, the method comprising the steps of
storing trigger events and an output generation function in a memory (1) of the device,
obtaining environment information from the environment of the device,
comparing the obtained environment information with the stored trigger events and, in case that the environment information matches a particular trigger event of the stored trigger events, generating output information related to the trigger event, and
the memory (1) is further configured to store personality trait parameters,
wherein the personality trait parameters are preselected from a plurality of available personality trait parameters and define a personality of the device, and
for each personality trait parameter of the preselected personality trait parameters for the device, the trigger events are stored associated along with the output information, and
**characterized in**
**that** the memory (1) comprises a personality memory section (11) which stores the trigger events associated with the personality trait parameters and output information which were generated in a trait generation process, and the method for defining the personality of the device comprises a step of
generating, by a personality trait determination unit (10), in the personality trait generation process, a character type database (17) based on a human traits data base (14) by storing character groups in the character type database (17), each character group having an individual probability distribution over human traits stored in the human traits database (14) including information on a plurality of topics human beings care about,
performing the personality trait generation process and configuring the output generation function to generate the output information on the basis of a particular personality trait parameter during manufacturing of the device and the preselected personality trait parameters in the memory are accessible by authorized personal only, and
building, by the personality trait determination unit (10), a human comment database (12) storing human comments as the output information correlated with the human traits and generating a trigger database (16) storing probability distributions correlating the trigger events with the trait output information and an activation probability of a specific trigger event generating a specific output information, and
**that** the output information generated in response to the environment information matching the trigger event is generated such that it deviates from previously output information in response to environment information matching the same trigger event.

18. Method according to claim 17, **characterized in**
**that** the device records information on a situation that is experienced together with a user of the device and generates occurrence of a corresponding situation as a new trigger condition and
the new trigger condition corresponds to a trigger event stored in the memory (1) of the device and one or more related outputs.

19. Method according to claim 17 or 18, **characterized in**
**that** the trigger conditions comprise thresholds for device related parameters and the computing unit (3) records statistics on these parameters.

20. Method according to claim 19, **characterized in**
**that** the particular personality trait parameter used in the output generation function is selected from the personality trait parameters depending on the obtained information matching a particular trigger event.

21. Method according to claim 19 or 20, **characterized in**
**that** the personality trait parameters describe a preference and/or a disfavor and/or an interest in a certain topic.

22. Method according to claim 20, **characterized in**
**that** the system stores different personality trait parameters for at least one of the following categories: music style, music performer, music song, historic or alive person of public interest, location, region, scientific field, societal field, weather, time, date, season, sports, sports team, device settings.

23. Method according to any one of claims 17 to 22, **characterized in**
**that** the computing unit (3) determines if the generated information is output immediately, wherein the determination considers at least one of if a conversation is currently held in the environment of the device, physical state of the device, weather, time since the last output, a situation encountered by the device, a state of the user of the device.

24. Method according to any one of claims 18 to 23,
**characterized in**
**that** the device outputs the generated information in at least one of the following ways Speech, utterance, prerecorded sounds pre-recorded music, written text, image, video, animation, lighting color, lighting pattern, visual icon, odor, device related settings.

25. Method according to claim 24, **characterized in**
**that** the way of outputting the generated information is determined on the basis of the personality trait parameter used in the output generation function.

26. Method according to any one of claims 18 to 25,
**characterized in**
**that** the device comprises an interface unit (4) for outputting the generated information, the interface unit comprising at least one of: a display, a loudspeaker, a number of LEDs, an odor generator for an anthropomorphic piece of hardware

## Patentansprüche

1. System zur Definition einer Persönlichkeit einer Vorrichtung, wobei die Vorrichtung umfasst:
einem Speicher (1), in dem Auslöseereignisse und eine Ausgabe-Erzeugungsfunktion gespeichert sind,
eine Informationsgewinnungseinheit (2), die so konfiguriert ist, dass sie Umgebungsinformationen aus der Umgebung der Vorrichtung erhält,
eine Recheneinheit (3), die so konfiguriert ist, dass sie die erhaltenen Umgebungsinformationen mit den gespeicherten Auslöseereignissen vergleicht und für den Fall, dass die Umgebungsinformationen mit einem Auslöseereignis der gespeicherten Auslöseereignisse übereinstimmen, Ausgabeinformationen erzeugt, die eine auf das Auslöseereignis bezogene Ausgabe auf der Grundlage der Ausgabe-Erzeugungsfunktion erzeugen, und
der Speicher (1) ist ferner so konfiguriert, dass er Persönlichkeitseigenschaftsparameter speichert,
wobei die Persönlichkeitseigenschaftsparameter aus einer Vielzahl von verfügbaren Persönlichkeitseigenschaftsparametern vorausgewählt sind und eine Persönlichkeit der Vorrichtung definieren, und
für jeden Persönlichkeitseigenschaftsparameter der vorgewählten Persönlichkeitseigenschaftsparameter für die Vorrichtung die Auslöseereignisse in Verbindung mit den Ausgangsinformationen gespeichert werden, und
**dadurch gekennzeichnet,**
**dass** das System eine Einheit (10) zur Bestimmung von Persönlichkeitseigenschaften umfasst, die so konfiguriert ist, dass sie einen Eigenschaftserzeugungsprozess durchführt, bei dem eine Charaktertypendatenbank (17) auf der Grundlage einer Datenbank (14) für menschliche Eigenschaften konstruiert wird, indem Charaktergruppen in der Charaktertypendatenbank (17) gespeichert werden, wobei jede Charaktergruppe eine individuelle Wahrscheinlichkeitsverteilung über menschliche Eigenschaften aufweist, die in der Datenbank (14) für menschliche Eigenschaften gespeichert sind und Informationen über eine Vielzahl von Themen enthalten, die den Menschen wichtig sind,
**dass** das System so konfiguriert ist, dass es den Prozess der Erzeugung von Persönlichkeitseigenschaften während der Herstellung der Vorrichtung durchführt und die Ausgabe-Erzeugungsfunktion so konfiguriert, dass die Ausgabeinformation auf der Grundlage eines bestimmten Persönlichkeitseigenschaftsparameters erzeugt wird, und dass die vorgewählten Persönlichkeitseigenschaftsparameter im Speicher nur für autorisiertes Personal zugänglich sind, und
der Speicher (1) einen Persönlichkeitsspeicherabschnitt (11) umfasst, der so konfiguriert ist, dass er die Auslöseereignisse, die mit Persönlichkeitseigenschaftsparametern verbunden sind, speichert und Informationen ausgibt, die in dem Prozess der Erzeugung von Persönlichkeitseigenschaften erzeugt werden, und
die Einheit (10) zur Bestimmung von Persönlichkeitseigenschaften ferner konfiguriert ist, um eine Datenbank (12) für menschliche Kommentare aufzubauen, die menschliche Kommentare als mit den menschlichen Eigenschaften korrelierte Ausgabeinformation speichert, und um eine Auslöse-Datenbank (16) zu erzeugen, die Wahrscheinlichkeitsverteilungen speichert, die die Auslöseereignisse mit der Eigenschafts-Ausgabeinformation und einer Aktivierungswahrscheinlichkeit eines spezifischen Auslöseereignisses, das eine spezifische Ausgabeinformation erzeugt, korrelieren,
**dass** die Ausgabeinformation, die als Reaktion auf die mit dem Auslöseereignis übereinstimmende Umgebungsinformation erzeugt wird, so erzeugt wird, dass sie von der zuvor als Reaktion auf die mit demselben Auslöseereignis übereinstimmende Umgebungsinformation ausgegebenen Information abweicht.

2. System nach Anspruch 1, **gekennzeichnet durch**
dass **durch** die Vorrichtung Informationen über eine Situation, die zusammen mit einem Benutzer der Vorrichtung erlebt wird, aufgezeichnet werden und das Auftreten einer entsprechenden Situation als neue Auslösebedingung erzeugt wird, und
die neue Auslösebedingung einem im Speicher (1) des Geräts gespeicherten Auslöseereignis und einer oder mehreren zugehörigen Ausgaben entspricht.

3. System nach Anspruch 1 oder 2, **dadurch gekennzeichnet, dass**
die Auslöseereignisse Schwellenwerte für vorrichtungsbezogene Parameter umfassen und die Recheneinheit (3) so konfiguriert ist, dass sie Statistiken über diese Parameter aufzeichnet.

4. System nach einem der Ansprüche 1 bis 3, **gekennzeichnet durch**
dass die Informationsgewinnungseinheit (2) so konfiguriert ist, dass sie mit einem Mikrofon (7.1), einer Kamera (7.2), einem globalen Positionierungssensor (7.3) und einem Temperatursensor (7.4) verbunden werden kann oder mindestens einen davon umfasst.

5. System nach einem der Ansprüche 1 bis 4, **gekennzeichnet durch**
dass der bestimmte Persönlichkeitseigenschaftsparameter, der in der Ausgabe-Erzeugungsfunktion verwendet wird, aus den Persönlichkeitseigenschaftsparametern in Abhängigkeit von den erhaltenen Informationen ausgewählt wird, die mit einem bestimmten Auslöseereignis übereinstimmen.

6. System nach Anspruch 5, **gekennzeichnet durch**
dass die Parameter der Persönlichkeitseigenschaften eine Präferenz und/oder eine Abneigung und/oder ein Interesse an einem bestimmten Thema beschreiben.

7. System nach einem der Ansprüche 1 bis 6, **gekennzeichnet durch**
dass das System so konfiguriert ist, dass es verschiedene Persönlichkeitseigenschaftsparameter für mindestens eine der folgenden Kategorien speichert: Musikstil, Musikinterpret, Musiklied, historische oder lebende Person von öffentlichem Interesse, Ort, Region, wissenschaftliches Feld, gesellschaftliches Feld, Wetter, Zeit, Datum, Jahreszeit, Sportarten, Sportmannschaft und Geräteeinstellungen.

8. System nach einem der Ansprüche 1 bis 7, **gekennzeichnet durch**
dass die Recheneinheit (3) konfiguriert ist, um zu bestimmen, ob die erzeugte Information sofort ausgegeben wird, wobei die Bestimmung mindestens einen der folgenden Aspekte berücksichtigt, wenn ein Gespräch gegenwärtig in der Umgebung der Vorrichtung geführt wird: einen physikalischen Zustand der Vorrichtung, das Wetter, die Zeit seit der letzten Ausgabe, eine von der Vorrichtung angetroffene Situation, einen Zustand des Benutzers der Vorrichtung.

9. System nach einem der Ansprüche 1 bis 8, **gekennzeichnet durch**
dass die erzeugte Information von dem Gerät auf mindestens eine der folgenden Arten ausgegeben wird:
Sprache, Äußerung, voraufgezeichnete Töne, voraufgezeichnete Musik, geschriebener Text, Bild, Video, Animation, Lichtfarbe, Lichtmuster, visuelles Symbol, Geruch, gerätebezogene Einstellungen.

10. System nach Anspruch 9, **gekennzeichnet durch**
dass die Art und Weise der Ausgabe der erzeugten Informationen **durch** die Vorrichtung auf der Grundlage des Persönlichkeitseigenschaftsparameters bestimmt wird, der in der Funktion zur Erzeugung der Ausgabe verwendet wird.

11. System nach einem der Ansprüche 1 bis 10, **gekennzeichnet durch**
dass die Vorrichtung eine Schnittstelleneinheit (4) zum Ausgeben der erzeugten Informationen umfasst, wobei die Schnittstelleneinheit mindestens eines der folgenden Elemente umfasst: eine Anzeige, einen Lautsprecher, eine Anzahl von LEDs, einen Geruchsgenerator für ein anthropomorphes Stück Hardware.

12. System nach einem der Ansprüche 3 bis 112,
wobei das System eine Eingabeeinheit umfasst, in der ein Benutzer Informationen über seine Interessen eingeben kann, und die Einheit (10) zur Bestimmung von Persönlichkeitseigenschaften so konfiguriert ist, dass sie einen Ähnlichkeitswert zwischen den Interessen des eingegebenen Benutzers und verfügbaren Persönlichkeitseigenschaftswerten bestimmt.

13. System nach einem der Ansprüche 1 bis 12, bei dem die Vorrichtung an einem Fahrzeug angebracht ist.

14. System nach Anspruch 13, **gekennzeichnet durch**
dass die Vorrichtung so konfiguriert ist, dass sie Fahrzeugstatistiken in Bezug auf mindestens einen der folgenden Parameter aufzeichnet: Alter, Kilometerstand, Anzahl der Betankungen, maximal gefahrene Geschwindigkeit, maximale Fahrtdauer, maximale Fahrstrecke, max/min Außentemperatur.

15. System nach Anspruch 13 oder 14, **gekennzeichnet durch**
dass die Informationsgeswinnungseinheit (2) mit mindestens einem der folgenden Elemente verbunden ist: einem Fahrzeugunterhaltungssystem, der Fahrzeugstatuseinheit, äußeren oder inneren Erfassungsvorrichtungen, einem Webdienst (8), einem mobilen Kommunikationsendgerät, einem Navigationssystem.

16. System nach einem der Ansprüche 13 bis 15, **gekennzeichnet durch**
dass die erzeugten Informationen ein Signal umfassen, das geeignet ist, Einstellungen der Fahrzeugausrüstung, insbesondere der Umgebungsbeleuchtung, des Infotainmentsystems oder der Klimaanlage, zu steuern.

17. Verfahren zum Definieren einer Persönlichkeit einer Vorrichtung, wobei das Verfahren die folgenden Schritte umfasst:
Speicherung von Auslöseereignissen und einer Ausgabe-Erzeugungsfunktion in einem Speicher (1) der Vorrichtung,
Gewinnung von Umgebungsinformationen aus der Umgebung der Vorrichtung,
Vergleichen der erhaltenen Umgebungsinformationen mit den gespeicherten Auslöseereignissen und, falls die Umgebungsinformationen mit einem bestimmten Auslöseereignis der gespeicherten Auslöseereignisse übereinstimmen, Erzeugen von auf das Auslöseereignis bezogenen Ausgabeinformationen, und
der Speicher (1) ferner so konfiguriert ist, dass er Persönlichkeitseigenschaftsparameter speichert,
wobei die Persönlichkeitseigenschaftsparameter aus einer Vielzahl von verfügbaren Persönlichkeitseigenschaftsparametern vorausgewählt sind und eine Persönlichkeit der Vorrichtung definieren, und
für jeden Persönlichkeitseigenschaftsparameter der vorgewählten Persönlichkeitseigenschaftsparameter für die Vorrichtung werden die Auslöseereignisse in Verbindung mit den Ausgangsinformationen gespeichert, und
**dadurch gekennzeichnet,**
**dass** der Speicher (1) einen Persönlichkeitsspeicherabschnitt (11) umfasst, der die Auslöseereignisse speichert, die mit den Persönlichkeitseigenschaftsparametern verbunden sind und Informationen ausgibt, die in einem Eigenschaftserzeugungsprozess erzeugt wurden, und dass das Verfahren zum Definieren der Persönlichkeit der Vorrichtung einen Schritt umfasst:
Erzeugen, durch eine Einheit (10) zur Bestimmung von Persönlichkeitseigenschaften, im Prozess der Erzeugung von Persönlichkeitseigenschaften, einer Charaktertypendatenbank (17), die auf einer Datenbank (14) für menschliche Eigenschaften basiert, durch Speichern von Charaktergruppen in der Charaktertypendatenbank (17), wobei jede Charaktergruppe eine individuelle Wahrscheinlichkeitsverteilung über menschliche Eigenschaften aufweist, die in der Datenbank (14) für menschliche Eigenschaften gespeichert sind, einschließlich Informationen über eine Vielzahl von Themen, um die sich Menschen kümmern,
Ausführen des Prozesses zur Erzeugung von Persönlichkeitseigenschaften und Konfigurieren der Funktion zur Erzeugung der Ausgabe zur Erzeugung der Ausgabeinformation auf der Grundlage eines bestimmten Persönlichkeitseigenschaftsparameters während der Herstellung der Vorrichtung, wobei die vorgewählten Persönlichkeitseigenschaftsparameter im Speicher nur für autorisiertes Personal zugänglich sind, und
Aufbau, durch die Einheit (10) zur Bestimmung von Persönlichkeitseigenschaften, einer Datenbank (12) für menschliche Kommentare, die menschliche Kommentare als die mit den menschlichen Eigenschaften korrelierten Ausgabeinformationen speichert und eine Auslöse-Datenbank (16) erzeugt, die Wahrscheinlichkeitsverteilungen speichert, die die Auslöseereignisse mit den Eigenschafts-Ausgabeinformationen und einer Aktivierungswahrscheinlichkeit eines spezifischen Ausläseereignisses, das eine spezifische Ausgabeinformation erzeugt, korreliert, und
**dass** die Ausgabeinformation, die als Reaktion auf die mit dem Auslöseereignis übereinstimmende Umgebungsinformation erzeugt wird, so erzeugt wird, dass sie von der zuvor als Reaktion auf die mit demselben Auslöseereignis übereinstimmende Umgebungsinformation ausgegebenen Information abweicht.

18. Verfahren nach Anspruch 17, **gekennzeichnet durch**
dass die Vorrichtung Informationen über eine Situation aufzeichnet, die zusammen mit einem Benutzer der Vorrichtung erlebt wird, und das Auftreten einer entsprechenden Situation als neue Auslösebedingung erzeugt und
die neue Auslösebedingung einem im Speicher (1) des Geräts gespeicherten Auslöseerereignis und einer oder mehreren zugehörigen Ausgaben entspricht.

19. Verfahren nach Anspruch 17 oder 18, **gekennzeichnet durch**
dass die Auslösebedingungen Schwellenwerte für vorrichtungsbezogene Parameter umfassen und die Recheneinheit (3) Statistiken über diese Parameter aufzeichnet.

20. Verfahren nach Anspruch 19, **gekennzeichnet durch**
dass der bestimmte Persönlichkeitseigenschaftsparameter, der in der Ausgabe-Erzeugungsfunktion verwendet wird, aus den Persönlichkeitseigenschaftsparametern in Abhängigkeit von den erhaltenen Informationen ausgewählt wird, die mit einem bestimmten Auslöseereignis übereinstimmen.

21. Verfahren nach Anspruch 19 oder 20, **gekennzeichnet durch**
dass die Parameter der Persönlichkeitseigenscchaften eine Präferenz und/oder eine Abneigung und/oder ein Interesse an einem bestimmten Thema beschreiben.

22. Verfahren nach Anspruch 20, **gekennzeichnet durch**
dass das System verschiedene Persönlichkeitseigenschaftsparameter für mindestens eine der folgenden Kategorien speichert: Musikstil, Musikinterpret, Musiklied, historische oder lebende Person von öffentlichem Interesse, Ort, Region, wissenschaftliches Feld, gesellschaftliches Feld, Wetter, Zeit, Datum, Jahreszeit, Sport, Sportmannschaft, Geräteeinstellungen.

23. Verfahren nach einem der Ansprüche 17 bis 22, **gekennzeichnet durch**
dass die Recheneinheit (3) bestimmt, ob die erzeugte Information sofort ausgegeben wird, wobei die Bestimmung mindestens eine der folgenden Faktoren berücksichtigt: ob derzeit ein Gespräch in der Umgebung der Vorrichtung geführt wird, physischer Zustand der Vorrichtung, Wetter, Zeit seit der letzten Ausgabe, eine Situation, der die Vorrichtung begegnet ist, ein Zustand des Benutzers der Vorrichtung.

24. Verfahren nach einem der Ansprüche 18 bis 23,
**dadurch gekennzeichnet**
**dass** die Vorrichtung die erzeugten Informationen auf mindestens eine der folgenden Arten ausgibt:
Sprache, Äußerung, voraufgezeichnete Töne, voraufgezeichnete Musik, geschriebener Text, Bild, Video, Animation, Lichtfarbe, Lichtmuster, visuelles Symbol, Geruch, gerätebezogene Einstellungen.

25. Verfahren nach Anspruch 24, **gekennzeichnet durch**
dass die Art und Weise der Ausgabe der erzeugten Informationen auf der Grundlage des Parameters für Persönlichkeitseigenschaften bestimmt wird, der in der Funktion zur Erzeugung der Ausgabe verwendet wird.

26. Verfahren nach einem der Ansprüche 18 bis 25,
**gekennzeichnet durch**
dass die Vorrichtung eine Schnittstelleneinheit (4) zum Ausgeben der erzeugten Informationen umfasst, wobei die Schnittstelleneinheit mindestens eines der folgenden Elemente umfasst: eine Anzeige, einen Lautsprecher, eine Anzahl von LEDs, einen Geruchsgenerator für ein anthropomorphes Stück Hardware.

## Revendications

1. Système de définition d'une personnalité d'un dispositif, le dispositif comprenant :
une mémoire (1) dans laquelle sont stockés des événements déclencheurs et une fonction de génération de sortie,
une unité d'obtention d'informations (2) configurée pour obtenir des informations d'environnement à partir de l'environnement du dispositif,
une unité de calcul (3) configurée pour comparer les informations d'environnement obtenues avec les événements déclencheurs stockés et, dans le cas où les informations d'environnement concordent avec un événement déclencheur des événements déclencheurs stockés, pour générer des informations de sortie qui génèrent une sortie liée à l'événement déclencheur, en fonction de ladite fonction de génération de sortie, et
la mémoire (1) est en outre configurée pour stocker des paramètres de traits de personnalité,
dans lequel les paramètres de traits de personnalité sont présélectionnés dans une pluralité de paramètres de traits de personnalité disponibles et définissent une personnalité du dispositif, et
pour chaque paramètre de traits de personnalité des paramètres de traits de personnalité présélectionnés pour le dispositif, les événements déclencheurs sont stockés associés avec les informations de sortie, et
**caractérisé**
**en ce que** le système comprend une unité de détermination de traits de personnalité (10) configurée pour effectuer un processus de génération de traits, où une base de données de types de caractères (17) est construite en fonction d'une base de données de traits humains (14) en stockant des groupes de caractères dans la base de données de types de caractères (17), chaque groupe de caractères ayant une distribution de probabilité individuelle sur les traits humains stockés dans la base de données de traits humains (14) comportant des informations sur une pluralité de sujets dont se soucient les êtres humains,
**en ce que** le système est configuré pour effectuer le processus de génération de traits de personnalité lors de la fabrication du dispositif et pour configurer la fonction de génération de sortie pour générer les informations de sortie sur la base d'un paramètre de traits de personnalité particulier, et les paramètres de traits de personnalité présélectionnés dans la mémoire ne sont accessibles qu'aux personnes autorisées, et
la mémoire (1) comprend une section de mémoire de personnalité (11) qui est configurée pour stocker les événements déclencheurs associés avec les paramètres de traits de personnalité et les informations de sortie générées dans le processus de génération de traits de personnalité, et
l'unité de détermination de traits de personnalité (10) est en outre configurée pour construire une base de données de commentaires humains (12) stockant des commentaires humains sous forme d'informations de sortie corrélées avec les traits humains et pour générer une base de données de déclencheurs (16) stockant des distributions de probabilité corrélant les événements déclencheurs avec les informations de sortie de traits et une probabilité d'activation d'un événement déclencheur spécifique générant des informations de sortie spécifiques,
**en ce que** les informations de sortie générées en réponse au fait que les informations d'environnement concordent avec l'événement déclencheur sont générées de sorte à s'écarter d'informations de sortie précédentes en réponse à des informations d'environnement concordantes avec le même événement déclencheur.

2. Système selon la revendication 1, **caractérisé en ce que**,
par le dispositif, des informations sur une situation qui est vécue avec un utilisateur du dispositif sont enregistrées et l'apparition d'une situation correspondante est générée en tant que nouvelle condition de déclenchement, et
la nouvelle condition de déclenchement correspond à un événement déclencheur stocké dans la mémoire (1) du dispositif et à une ou plusieurs sorties liées.

3. Système selon la revendication 1 ou 2, **caractérisé en ce que**
les événements déclencheurs comprennent des seuils pour paramètres liés au dispositif et l'unité de calcul (3) est configurée pour enregistrer des statistiques sur ces paramètres.

4. Système selon l'une quelconque des revendications 1 à 3, **caractérisé en ce que**
l'unité d'obtention d'informations (2) est configurée pour être connectée à ou comprendre au moins un parmi un microphone (7.1), une caméra (7.2), un capteur de positionnement mondial (7.3) et un capteur de température (7.4).

5. Système selon l'une quelconque des revendications 1 à 4, **caractérisé en ce que**
le paramètre de traits de personnalité particulier utilisé dans la fonction de génération de sortie est sélectionné dans les paramètres de traits de personnalité dépendant des informations obtenues concordant avec un événement déclencheur particulier.

6. Système selon la revendication 5, **caractérisé en ce que**
les paramètres de traits de personnalité décrivent une préférence et/ou un avis défavorable et/ou un intérêt pour un certain sujet.

7. Système selon l'une quelconque des revendications 1 à 6, **caractérisé en ce que** le système est configuré pour stocker différents paramètres de traits de personnalité pour au moins une des catégories suivantes : style de musique, interprète musical, chanson musicale, personne historique ou vivante d'intérêt public, emplacement, région, domaine scientifique, domaine sociétal, météo, heure, date, saison, sports, équipe sportive et réglages de dispositifs.

8. Système selon l'une quelconque des revendications 1 à 7, **caractérisé en ce que**
l'unité de calcul (3) est configurée pour déterminer si les informations générées sont délivrées immédiatement, dans lequel la détermination prend en compte au moins l'un des éléments suivants, si une conversation est actuellement tenue dans l'environnement du dispositif, un état physique du dispositif, la météo, le temps écoulé depuis la dernière sortie, une situation rencontrée par le dispositif, un état de l'utilisateur du dispositif.

9. Système selon l'une quelconque des revendications 1 à 8, **caractérisé en ce que**
les informations générées sont délivrées par le dispositif par au moins l'un des moyens suivants :
un discours, un énoncé, des sons préenregistrés, de la musique préenregistrée, du texte écrit, une image, de la vidéo, une animation, une couleur d'éclairage, un motif lumineux, une icône visuelle, une odeur, des réglages liés au dispositif.

10. Système selon la revendication 9, **caractérisé en ce que**
le moyen dont les informations générées sont délivrées est déterminé par le dispositif sur la base du paramètre de traits de personnalité utilisé dans la fonction de génération de sortie.

11. Système selon l'une quelconque des revendications 1 à 10, **caractérisé en ce que** le dispositif comprend une unité d'interface (4) pour délivrer les informations générées, l'unité d'interface comprenant au moins l'un parmi : un écran, un haut parleur, un certain nombre de DEL (diodes électroluminescentes), un générateur d'odeur pour une pièce de matériel anthropomorphique.

12. Système selon l'une quelconque des revendications 3 à 11,
dans lequel le système comprend une unité d'entrée où un utilisateur peut entrer des informations sur ses intérêts, et l'unité de détermination de traits de personnalité (10) est configurée pour déterminer un score de similarité entre les intérêts d'utilisateur entrés et des valeurs de trait de personnalité disponibles.

13. Système selon l'une quelconque des revendications 1 à 12, dans lequel le dispositif est monté sur un véhicule.

14. Système selon la revendication 13, **caractérisé en ce que**
le dispositif est configuré pour enregistrer des statistiques véhicule par rapport à au moins l'un parmi les paramètres suivantes : l'âge, le kilométrage, le nombre de ravitaillements, la vitesse maximale de conduite, la durée maximale de conduite, la distance maximale de conduite, la température extérieure max/min.

15. Système selon la revendication 13 ou 14, **caractérisé en ce que**
l'unité d'obtention d'informations (2) est connectée à au moins l'un parmi : un système de divertissement de véhicule, l'unité de statut de véhicule, des dispositifs de détections à l'extérieur ou à, l'intérieur, un service web (8), un terminal de communication mobile, un système de navigation.

16. Système selon l'une quelconque des revendications 13 à 15, **caractérisé en ce que**
les informations générées comprennent un signal approprié pour commander les réglages des équipement de véhicule, en particulier l'éclairage ambiant, le système d'info-divertissement ou la climatisation.

17. Procédé de définition d'une personnalité d'un dispositif, le procédé comprenant les étapes consistant à :
stocker des événements déclencheurs et une fonction de génération de sortie dans un mémoire (1) du dispositif,
obtenir des informations d'environnement à partir de l'environnement du dispositif,
comparer les informations d'environnement obtenues avec les événements déclencheurs stockés et, dans le cas où les informations d'environnement concordent avec un événement déclencheur particulier des événements déclencheurs stockés, générer des informations de sortie liées à l'événement déclencheur, et
la mémoire (1) est en outre configurée pour stocker des paramètres de traits de personnalité,
dans lequel les paramètres de traits de personnalité sont présélectionnés dans une pluralité de paramètres de traits de personnalité disponibles et définissent une personnalité du dispositif, et
pour chaque paramètre de traits de personnalité des paramètres de traits de personnalité présélectionnés pour le dispositif, les événements déclencheurs sont stockés associés avec les informations de sortie, et **caractérisé en ce que**
la mémoire (1) comprend une section de mémoire de personnalité (11) qui stocke l'événement déclencheur associé avec les paramètres de traits de personnalité et les informations de sortie qui ont été générées dans un processus de génération de traits, et le procédé de définition de personnalité du dispositif comprend une étape consistant à
générer, par une unité de détermination de traits de personnalité (10), dans le processus de génération de traits de personnalité, une base de données de types de caractères (17) en fonction d'une base de données de traits humains (14) en stockant des groupes de caractères dans la base de données de types de caractères (17), chaque groupe de caractères ayant une distribution de probabilité individuelle sur des traits humains stockés dans la base de données de traits humains (14) comportant des informations sur une pluralité de sujets dont se soucient les êtres humains,
effectuer le processus de génération de traits de personnalité et configurer la fonction de génération de sortie pour générer les informations de sortie sur la base d'un paramètre de traits de personnalité particulier lors de la fabrication du dispositif, et les paramètres de traits de personnalité présélectionnés dans la mémoire ne sont accessibles qu'aux personnes autorisées, et
construire, par l'unité de détermination de traits de personnalité (10), une base de données de commentaires humains (12) stockant des commentaires humains sous forme d'informations de sortie corrélées avec les traits humains, et générer une base de données de déclencheurs (16) stockant des distributions de probabilité corrélant les événements déclencheurs avec les informations de sortie de traits et une probabilité d'activation d'un événement déclencheur spécifique générant des informations de sortie spécifiques, et
**en ce que** les informations de sortie générées en réponse aux informations d'environnement concordant avec l'événement déclencheur sont générées de sorte à s'écarter d'informations de sortie précédentes en réponse au fait que les informations d'environnement concordant avec le même événement déclencheur.

18. Procédé selon la revendication 17, **caractérisé en ce que**
le dispositif enregistre des informations sur une situation qui est vécue avec un utilisateur du dispositif et génère l'apparition d'une situation correspondante en tant que nouvelle condition de déclenchement et
la nouvelle condition de déclenchement correspond à un événement déclencheur stocké dans la mémoire (1) du dispositif et une ou plusieurs sorties liées.

19. Procédé selon la revendication 17 ou 18, **caractérisé en ce que**
les conditions de déclenchement comprennent des seuils pour des paramètres liés au dispositif et l'unité de calcul (3) enregistre des statistiques sur ces paramètres.

20. Procédé selon la revendication 19, **caractérisé en ce que**
le paramètre de traits de personnalité particulier utilisé dans la fonction de génération de sortie est sélectionné dans les paramètres de traits de personnalité dépendant des informations obtenues concordant avec un événement déclencheur particulier.

21. Procédé selon la revendication 19 ou 20, **caractérisé en ce que**
les paramètres de traits de personnalité décrivent une préférence et/ou un avis défavorable et/ou un intérêt dans un certain sujet.

22. Procédé selon la revendication 20, **caractérisé en ce que**
le système stocke différents paramètres de traits de personnalité pour au moins une des catégories suivantes : style de musique, interprète musical, chanson musicale, personne historique ou vivante d'intérêt public, emplacement, région, domaine scientifique, domaine sociétal, météo, heure, date, saison, sports, équipe sportive, réglages de dispositifs.

23. Procédé selon l'une quelconque des revendications 17 à 22, **caractérisé en ce que**
l'unité de calcul (3) détermine si les informations générées sont délivrées immédiatement, dans lequel la détermination prend en compte au moins l'un des éléments suivants si une conversation est actuellement tenue dans l'environnement du dispositif, l'état physique du dispositif, la météo, le temps écoulé depuis la dernière sortie, une situation rencontrée par le dispositif, un état de l'utilisateur du dispositif.

24. Procédé selon l'une quelconque des revendications 18 à 23, **caractérisé en ce que**
le dispositif délivre les informations générées par le dispositif par au moins l'un des moyens suivants :
un discours, un énoncé, des sons préenregistrés, de la musique préenregistrée, du texte écrit, une image, de la vidéo, une animation, une couleur d'éclairage, un motif lumineux, une icône visuelle, une odeur, des réglages liés au dispositif.

25. Procédé selon la revendication 24, **caractérisé en ce que**
le moyen de sortie des informations générées est déterminé sur la base du paramètre de traits de personnalité utilisé dans la fonction de génération de sortie.

26. Procédé selon l'une quelconque des revendications 18 à 25, **caractérisé en ce que**
le dispositif comprend une unité d'interface (4) pour délivrer les informations générées, l'unité d'interface comprenant au moins l'un parmi : un écran, un haut parleur, un certain nombre de DEL, un générateur d'odeur pour une pièce de matériel anthropomorphique.
